# EUROPÄISCHE PATENTANMELDUNG

(11) **EP 0 870 633 A2**
(43) Veröffentlichungstag der Anmeldung: **14.10.1998**
(21) Anmeldenummer: 98101131.5
(22) Anmeldetag: 23.01.1998
(51) Int. Cl.: B60H 1/00

(54) **Temperaturregeleinrichtung für den Kofferraum eines PKW**

(30) Priorität: 08.04.1997 DE 19714333
(71) Anmelder: Tress, Franz, D-72525 Münsingen (DE)
(72) Erfinder: Tress, Franz, D-72525 Münsingen (DE)
(74) Vertreter: Möbus, Daniela, Dr.-Ing.

(57) **Zusammenfassung**

Eine Temperaturregeleinrichtung für den Kofferraum eines PKW mit mindestens einem von der Heiz- und/oder Klimaanlage der Fahrgastzelle ausgehenden und in den Kofferraum geführten Verbindungskanal, der von der Fahrgastzelle aus verschließ- und öffenbar ist.

## Beschreibung

Bei PKWs ist über eine Heizanlage oder eine Klimaanlage bisher lediglich die Temperatur in der Fahrgastzelle regulierbar. Im Kofferraum herrscht hingegen eine Temperatur, die weitgehend der Außentemperatur des Fahrzeuges entspricht. Im Sommer herrschen daher relativ hohe Temperaturen im Kofferraum, während im Winter auch Temperaturen unter 0 °C im Kofferraum auftreten können. Der Transport von Gütern, die entweder gegen eine zu starke Erwärmung oder eine zu starke Abkühlung empfindlich sind, mußte daher bislang in der Fahrgastzelle erfolgen, wo die Güter jedoch das Raumangebot für die Fahrgäste deutlich einschränken.

Zur Abhilfe dieses Problems schlägt die Erfindung eine Temperaturregeleinrichtung für den Kofferraum eines PKW vor, die gekennzeichnet ist durch mindestens einen von der Heiz- und/oder Klimaanlage der Fahrgastzelle ausgehenden und in den Kofferraum geführten Verbindungskanal, der von der Fahrgastzelle aus verschließ- und öffenbar ist. Durch diese Einrichtung wird warme bzw. kalte Luft aus der Heiz- oder Klimaanlage auch bis in den Kofferraum des Fahrzeuges verteilt. Hierdurch kann die Temperatur im Kofferraum auf den gleichen Wert wie in der Fahrgastzelle eingestellt werden. Auch temperaturempfindliche Güter können nun im Kofferraum transportiert werden und nehmen somit den Fahrgästen keinen Platz weg.

Der mindestens eine Verbindungskanal kann beispielsweise auch aus einem Schlauch gebildet sein, so daß sich bereits auf dem Markt befindliche Fahrzeuge mit einer erfindungsgemäßen Einrichtung nachrüsten lassen. Zweckmäßigerweise kann der mindestens eine Verbindungskanal mittels steuerbarer Klappen verschließ- und öffenbar sein. Die Betätigung der Klappen kann durch einen Schalter am Armaturenbrett erfolgen. Der Durchlaßquerschnitt des mindestens einen Verbindungskanals kann jedoch auch einstellbar sein. Auf diese Weise ist im Kofferraum auch eine von der Temperatur der Fahrgastzelle abweichende Temperatur durch Variation der zirkulierenden Luftmenge einstellbar. Es können auch mehrere Verbindungskanäle zwischen der Heiz- und/oder Klimaanlage und dem Kofferraum vorgesehen sein. Hierdurch läßt sich eine besonders gleichmäßige Temperaturverteilung im Kofferraum erzielen.

## Patentansprüche

1. Temperaturregeleinrichtung für den Kofferraum eines PKW, gekennzeichnet durch mindestens einen von der Heiz- und/oder Klimaanlage der Fahrgastzelle ausgehenden und in den Kofferraum geführten Verbindungskanal, der von der Fahrgastzelle aus verschließ- und öffenbar ist.

2. Temperaturregeleinrichtung nach Anspruch 1, dadurch gekennzeichnet, daß der mindestens eine Verbindungskanal mittels steuerbarer Klappen verschließ- und öffenbar ist.

3. Temperaturregeleinrichtung nach Anspruch 1 oder 2, dadurch gekennzeichnet, daß der Durchlaßquerschnitt des mindestens einen Verbindungskanals einstellbar ist.

4. Temperaturregeleinrichtung nach einem der Ansprüche 1 bis 3, dadurch gekennzeichnet, daß mehrere Verbindungskanäle zwischen Heiz- und/oder Klimaanlage und Kofferraum vorgesehen sind.
